# EUROPÄISCHE PATENTSCHRIFT

(11) **EP 3 341 237 B1**
(45) Veröffentlichungstag und Bekanntmachung des Hinweises auf die Patenterteilung: **20.03.2019**
(21) Anmeldenummer: 16731034.1
(22) Anmeldetag: 18.06.2016
(51) Int. Cl.: B60L 11/18, H01F 38/14, H02J 50/00

(54) **BODENSTATION ZUM INDUKTIVEN LADEN EINES KRAFTFAHRZEUGS**
GROUND STATION FOR INDUCTIVE CHARGING OF A MOTOR VEHICLE
STATION AU SOL PERMETTANT LA CHARGE INDUCTIVE D'UN VÉHICULE AUTOMOBILE

(30) Priorität: 27.08.2015 DE 102015011285
(43) Veröffentlichungstag der Anmeldung: 04.07.2018
(73) Patentinhaber: Daimler AG, 70327 Stuttgart (DE)
(72) Erfinder: BAUMER, Timo, 70178 Stuttgart (DE); BERGFELDER, Björn, 53840 Troisdorf (DE)
(74) Vertreter: JENSEN & SON
(86) Internationale Anmeldenummer: PCT/EP2016/001040
(87) Internationale Veröffentlichungsnummer: WO 2017/032434

(56) Entgegenhaltungen:
- WO-A2-2011/006884
- JP-A- 2013 147 142

## Beschreibung

Die Erfindung betrifft eine Bodenstation zum Laden eines Kraftfahrzeugs gemäß dem Oberbegriff des Patentanspruchs 1.

An Bodenladestationen (ground pad modules, GPM) werden sowohl Anforderungen hinsichtlich einer Dichtigkeit gegenüber Feuchtigkeit gestellt, was aufgrund der verwendeten elektronischen Bauelemente unverzichtbar ist, als auch hinsichtlich einer Kühlfunktion mit einem vorgegebenen Leistungsvermögen zur Abführung der aufgrund der Verlustleistung in der Bodenladestation anfallenden Wärmeenergie, damit ein Betrieb der elektronischen Bauelemente innerhalb des zulässigen Temperaturbereichs sichergestellt ist. Eine Möglichkeit der Ausgestaltung der Kühlung ist eine Zwangsluftkühlung mit Kühlrippen und einem Lüfter, wobei deren konstruktive Auslegung aufgrund des offenen Luftaustausches in Konkurrenz mit der geforderten Dichtigkeit steht.

Aus der US 2014/0097671 A1 ist eine gattungsgemäße Bodenstation bekannt, welche als kreisrunde Energieübertragungseinheit mit einer Primärspule und einem Kondensator ausgebildet ist. Zwischen einem Spulenträgerelement und einer Führungswand ist ein Luftkanal angeordnet, durch welchen die Luft von einem Gebläse passieren kann. Ein Teil der Luft, welcher in die Energieübertragungseinheit von dem Gebläse eingeblasen wird, strömt durch den Luftkanal, wodurch auf der Seite der Energieübertragungseinheit eine Primärspule gekühlt wird, welche auf einer äußeren umlaufenden Oberfläche des Spulenträgerelements montiert ist.

WO2011006884 zeigt eine bodenseitiges Spulengehäuse zum induktiven Laden von Fahrzeugen mit einem spritzwassersicherem Zuluftschacht und einem Regenwasserablauf mit Fliegengitter (Fig. 7)

Es ist daher Aufgabe der vorliegenden Erfindung, eine Bodenstation zum Laden eines Kraftfahrzeugs bereitzustellen, welche einen verbesserten Schutz gegen eindringendes Spritz- oder Flutwasser bietet und gleichzeitig eine aktive Kühlung von innerhalb der Bodenstation angeordneten elektrischen und/oder elektronischen Baugruppen ermöglicht.

Diese Aufgabe wird durch eine Bodenstation mit den Merkmalen des Patentanspruchs 1 gelöst. Vorteilhafte Weiterbildungen der vorliegenden Erfindung sind Gegenstand der abhängigen Ansprüche.

Die Erfindung geht von einer Bodenstation zum Laden eines Kraftfahrzeugs aus, wobei die Bodenstation zur Anordnung auf einem von dem Kraftfahrzeug befahrbaren Untergrund ausgelegt ist, umfassend eine innerhalb der Bodenstation angeordnete Lüftereinheit, welche dazu eingerichtet ist, zumindest eine innerhalb der Bodenstation angeordnete elektrische und/oder elektronische Bautruppe mittels eines aus einem Außenbereich der Bodenstation zuführbaren Luftstroms zu kühlen. Erfindungsgemäß ist ein Zuführungskanal des Luftstroms derart ausgebildet, dass bei bestimmungsgemäßer Anordnung der Bodenstation durch eine Zuführungsöffnung des Zuführungskanals eindringendes Wasser auf dem Weg zu der Lüftereinheit und/oder der Baugruppe zumindest eine Stufe in einer Komponente einer Fließrichtung des Wassers überwinden muss, wobei die Komponente in entgegengesetzter Richtung zu der Schwerkraft zeigt. Hierdurch kann eine Zwangsluftkühlung für eine auf dem befahrbaren Untergrund (Boden) liegende Bodenstation, welche zumindest eine innerhalb der Bodenstation angeordnete elektrische und/oder elektronische Baugruppe umfasst, realisiert werden bei einer gleichzeitigen Dichtigkeit gegenüber Eindringen von Wasser, insbesondere kann hier eine Flut- und/oder Spritzwasserdichtigkeit erzielt werden. Durch die Anordnung von elektronischen Baugruppen innerhalb der Bodenstation ist es möglich, auf eine separat anzuordnende Einheit, beispielsweise ein an einer Wand angeordnetes Ladegerät, zu verzichten und stattdessen sämtliche elektronische Baugruppen, welche zum Laden des Kraftfahrzeugs benötigt werden, in der Bodenstation zu integrieren.

In einer vorteilhaften Weiterbildung beträgt die Höhe der zu überwindenden Stufe mindestens 40 Prozent der Bauhöhe der Bodenstation, welche durch den Abstand zwischen einer dem befahrbaren Untergrund zugewandten Unterseite und einer dazu gegenüberliegenden, dem befahrbaren Untergrund abgewandten Oberseite gegeben ist, bevorzugt mindestens 60 Prozent, insbesondere mindestens 75 Prozent. Auf diese Weise kann sichergestellt werden, dass Spritz- oder Flutwasser entgegen der Schwerkraft eine vorgebbare Höhe überwinden muss, bevor es tiefer in die Bodenstation eindringen kann.

In einer weiteren vorteilhaften Ausführungsform ist vor und/oder hinter der Stufe eine Membran in einer Öffnung der Gehäuseunterseite angeordnet, welche bei bestimmungsgemäßer Anordnung der Bodenstation dem Untergrund zugewandt ist, wobei die Membran dazu ausgelegt ist, in den Zuführungskanal eingedrungenes Wasser, welches nicht mehr selbsttätig durch die Zuführungsöffnung abfließen kann, durch die Öffnung der Gehäuseunterseite entweichen zu lassen und ein Eindringen von Wasser durch die Öffnung der Gehäuseunterseite zu verhindern. Eine derartige Anordnung ermöglicht insbesondere eine mehrstufige Barriere gegen eindringendes Wasser, ohne dass sich auf Dauer eine größere Menge von Wasser im Inneren der Bodenstation ansammelt.

Bevorzugt ist die Bodenstation zur drahtlosen Energieübertragung an das Kraftfahrzeug ausgelegt, insbesondere zur induktiven Energieübertragung.

In einer weiteren vorteilhaften Ausführungsform weist der Zuführungskanal im Bereich vor und/oder hinter der Stufe einen U-förmigen Verlauf auf, wobei insbesondere zwei U-förmige Teilstücke in entgegengesetzter Ausrichtung zur Ausbildung eines wellenförmigen Verlaufs aneinander anschließen. Dadurch kann in besonders vorteilhafter Weise eine mehrstufige Barriere gegen eindringendes Wasser realisiert werden, wobei dem eindringenden Wasser kinetische und/oder potentielle Energie entzogen wird, bis es in einem dafür vorgesehenen Auffangbereich aufgefangen wird, welcher durch die bereits dargestellte Membran wieder entwässert werden kann.

In einer weiteren vorteilhaften Ausführungsform weist die Bodenstation zum Ableiten des Luftstroms in den Außenbereich einen Auslasskanal mit einer Auslassöffnung auf, wobei der Auslasskanal symmetrisch zu dem Zuführungskanal ausgebildet ist. Dabei kann vorgesehen sein, dass der Luftstrom, welcher in Strömungsrichtung ausgehend von der Zuführungsöffnung die in dem Zuführungskanal angeordneten konstruktiven Elemente in einer ersten Reihenfolge passiert, danach an der Lüftereinheit und der Baugruppe vorbeiströmt und anschließend einen Auslasskanal bis zu der Auslassöffnung durchströmt, wobei bei der Durchströmung des Auslasskanals dieselben konstruktiven Anordnungen zur Verhinderung des Eindringens von Wasser in nunmehr einer zu der ersten Reihenfolge entgegengesetzten zweiten Reihenfolge durchströmt werden.

Eine symmetrische Ausbildung des Auslasskanals zu dem Zuführungskanal ist daher nicht zwangsläufig als eine geometrisch exakte Spiegelung von Abmessungen zu verstehen, sondern bezieht sich vielmehr auf eine funktionelle Abfolge der einzelnen konstruktiven Merkmale des Zuführungskanals und des Auslasskanals.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: in vereinfachter schematischer Darstellung eine bevorzugte Ausführungsform einer erfindungsgemäßen Bodenstation mit Luftkanal und Zwangsluftkühlung, und
- Fig. 2: diverse Lufteinlass- und Luftführungsvarianten entsprechend weiterer bevorzugter Ausführungsbeispiele der erfindungsgemäßen Bodenstation.

Gleiche, ähnliche und/oder funktionsgleiche Objekte sind mit gleichen Bezugszeichen versehen.

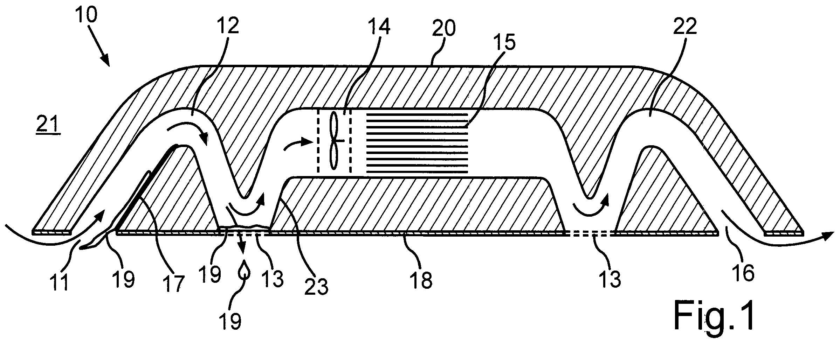

In Fig. 1 ist eine bevorzugte Ausführungsform einer erfindungsgemäßen Bodenstation 10 in einer seitlichen Querschnittsansicht dargestellt. Die Bodenstation 10 weist eine Unterseite 18 auf, welche einem befahrbaren Untergrund zugewandt ist. Zwischen der Unterseite 18 und einer dazu gegenüberliegenden, dem befahrbaren Untergrund abgewandten Oberseite 20 ist eine Lüftereinheit 14 sowie eine elektronische Baugruppe 15 angeordnet. Die Lüftereinheit 14 und die elektronische Baugruppe 15 können von einem durch einen Zuführungskanal 12 zuführbaren Luftstrom durchströmt werden. Der von einem Außenbereich 21 durch eine Zuführungsöffnung 11 zuführbare Luftstrom gelangt in den Zuführungskanal 12, indem er zunächst über eine Stufe 17 geführt wird. Eventuell eindringendes Wasser 19 kann an der Stufe 17 abgefangen werden. Sollte das Wasser 19 mit einer derart hohen Geschwindigkeit einströmen, dass es in der Lage ist, die Stufe 17 zu überwinden, so kann vorgesehen sein, in einem hinter der Stufe 17 liegenden Bereich, in dem die Unterseite 18 eine Öffnung aufweist, eine Membran anzuordnen, welche eingedrungenes Wasser 19 durch die Öffnung der Unterseite 18 entweichen lässt und in entgegengesetzter Richtung ein Eindringen von Wasser 19 durch die Öffnung der Unterseite 18 verhindert.

Symmetrisch zu dem Zuführungskanal 12 kann ein Auslasskanal 22 ausgebildet sein, welcher in eine Auslassöffnung 16 mündet. Eine Hilfsstufe 23 kann verhindern, dass Wasser 19, welches die Stufe 17 überwunden hat und sich auf der Membran 13 sammelt, zu der Lüftereinheit 14 und der Baugruppe 15 weiterfließen kann. Die Ausgestaltung des Auslasskanals 22 liegt symmetrisch zu dem Zuführungskanal 12 vor, die Ausführungen zu dem Wasser 19, der Stufe 17 sowie der Hilfsstufe 23 gelten dementsprechend auch auf der Seite des Auslasskanals 22. Die Bodenstation 10 kann rund oder rechteckig, insbesondere quadratisch in Richtung der Oberseite 20 oder der Unterseite 18 betrachtet ausgestaltet sein, der Zuführungskanal 12 und der Auslasskanal 22 können ringförmig oder (in Richtung der Unterseite 18 oder der Oberseite 20 betrachtet) und/oder röhrenförmig (in Strömungsrichtung des Luftstroms betrachtet) ausgebildet sein.

Zuluft gelangt durch die Zuführungsöffnung 11 in den Luftkanal , welcher im Verlauf vor der Lüftereinheit 14 durch den Zuführungskanal 12 gegeben ist. Die Geometrie (U-Form) des Luftkanals verhindert ein Eindringen von Wasser 19 zu einem Lüfter/Kühlmodul in Form der Lüftereinheit 14. Die Membran 13 kann im Zuführungskanal 12 vorhandenes Wasser 19 abscheiden, wobei Feuchtigkeit nur nach außen in Richtung des Außenbereichs 21 abgegeben werden kann. Die Kühlluft wird durch die Lüftereinheit 14 durch den Luftkanal transportiert, welcher im weiteren Verlauf nach der Baugruppe 15 durch den Auslasskanals 22 gegeben ist. Die eigentliche Kühlung der Elektronik wird durch die vorbeiströmende Luft an Kühlrippen der Baugruppe 15 realisiert. Die Funktion der Wasserabscheidung wird an der Auslassöffnung 16 beziehungsweise dem Auslasskanals 22 gespiegelt.

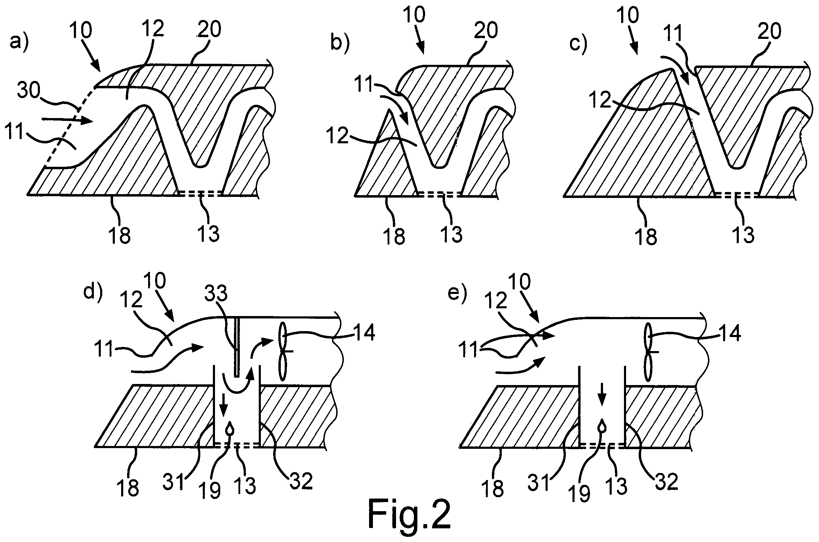

Die in der Fig. 2 dargestellten Lufteinlass- und Luftführungsvarianten a) bis e) werden im Folgenden näher erläutert.

Variante a) zeigt eine seitlich an der Bodenstation 10 angeordnete Zuführungsöffnung 11, welche sich über einen großen Teil der Bauhöhe zwischen der Unterseite 18 und der Oberseite 20 erstreckt, wobei die Zuführungsöffnung 11 mit einem Schutzgitter 30 abgedeckt ist. Das Schutzgitter 30 kann hier beispielsweise dazu dienen, auftreffendes Wasser abzubremsen und damit ein tieferes Eindringen des Wassers 19 in den Zuführungskanal 12 zu verhindern. In einer Öffnung der Unterseite 18 ist die bereits aus der Fig. 1 bekannte Membran 13 angeordnet.

Gemäß der Variante b) ist die Zuführungsöffnung 11 seitlich im oberen Bereich der Bodenstation 10 angeordnet, wobei der Zuführungskanal einen V-förmigen beziehungsweise U-förmigen Verlauf aufweist, wobei am Boden des bogenförmigen Verlaufs des Zuführungskanals 12 die Membran 13 angeordnet ist.

Gemäß der Variante c) ist die Zuführungsöffnung 11 auf der Oberseite 20 der Bodenstation 10 angeordnet, wodurch sich in vorteilhafter Weise für seitlich
- anströmendes Wasser eine maximal mögliche Höhe der zu überwindenden Stufe ergibt, nämlich der Abstand zwischen der Unterseite 18 und der Oberseite 20.

Variante d) zeigt die Zuführungsöffnung 11 auf halber Höhe der Bodenstation 10, wobei der Luftstrom durch den Zuführungskanal 12 über ein Auffanggefäß strömt, welches zur Abscheidung von mitgeführtem Wasser 19 zwischen einer ersten Wand 31 und einer zweiten Wand 32 ausgebildet ist. Am Boden dieses Auffanggefäßes ist in bekannter Weise die Membran 13 angeordnet. Zur Verhinderung eines direkten Weitertragens von Wasser 19 in Richtung auf die Lüftereinheit 14 ist eine dritte Wand 33, welche sich von dem oberen Bereich des Zuführungskanals 12 ausgehend von der Oberseite 20 bis in das Auffanggefäß zwischen die erste Wand 31 und die zweite Wand 32 erstreckt.

Dadurch wird der Luftstrom erst nach unten und dann wieder nach oben umgeleitet und mitgeführtes Wasser 19 effektiv in das Auffanggefäß zwischen der ersten Wand 31 und der zweiten Wand 32 geleitet. Auf diese Weise können vorteilhaft auch größere Flüssigkeitsmengen, welche durch die Zuführungsöffnung 11 eingedrungen sind, abgefangen werden.

Variante e) ist weitgehend identisch mit der Variante d), der einzige Unterschied besteht in dem Weglassen der dritten Wand 33, sodass der Luftstrom durch den Zuführungskanal 12 in gerader Richtung zu der Lüftereinheit 14 gelangen kann. Bei einem entsprechend vorgegebenen Abstand zwischen der ersten Wand 31 und der zweiten Wand 32 kann eingetretenes Wasser 19 allein durch die Schwerkraft in das Auffanggefäß zwischen der ersten Wand 31 und der zweiten Wand 32 eingeleitet werden.

Die dargestellten Varianten a) bis e) gelten selbstverständlich in analoger Weise für den entsprechenden Auslasskanal 22 mit der Auslassöffnung 16. Ebenso können beliebige Kombinationen der dargestellten Varianten an der Zuführungsseite und der Auslassseite vorgesehen sein.

Die Ausführungsbeispiele dienen lediglich der Erläuterung der Erfindung und sind für diese nicht beschränkend. So können natürlich die Form des Zuführungskanals 12 und/oder des Auslasskanals 22, sowie deren Abfolge und die Anordnung von Membranen 13 in der Unterseite 18 beliebig gestaltet sein, ohne den Gedanken der Erfindung zu verlassen.

Somit wurde voranstehend gezeigt, wie ein Spritz- und Flutwasserschutz für Bodenladestationen, insbesondere für induktives Laden, mit Zwangsluftkühlung realisiert sein kann.

### Bezugszeichenliste

- 10: Bodenstation
- 11: Zuführungsöffnung
- 12: Zuführungskanal
- 13: Membran
- 14: Lüftereinheit
- 15: elektronische Baugruppe
- 16: Auslassöffnung
- 17: Stufe
- 18: Unterseite
- 19: Wasser
- 20: Oberseite
- 21: Außenbereich
- 22: Auslasskanal
- 23: Hilfsstufe
- 30: Schutzgitter
- 31: erste Wand
- 32: zweite Wand
- 33: dritte Wand

## Patentansprüche

1. Bodenstation (10) zum Laden eines Kraftfahrzeugs, wobei die Bodenstation zur Anordnung auf einem von dem Kraftfahrzeug befahrbaren Untergrund ausgelegt ist, umfassend eine innerhalb der Bodenstation angeordnete Lüftereinheit (14), welche dazu eingerichtet ist, zumindest eine innerhalb der Bodenstation angeordnete elektrische und/oder elektronische Baugruppe (15) mittels eines aus einem Außenbereich (21) der Bodenstation zuführbaren Luftstroms zu kühlen,
wobei ein Zuführungskanal (12) des Luftstroms derart ausgebildet ist, dass bei bestimmungsgemäßer Anordnung der Bodenstation durch eine Zuführungsöffnung (11) des Zuführungskanals eindringendes Wasser (19) auf dem Weg zu der Lüftereinheit und/oder der Baugruppe zumindest eine Stufe (17) in einer Komponente einer Fließrichtung des Wassers überwinden muss,
wobei die Komponente in entgegengesetzter Richtung zu der Schwerkraft zeigt, **dadurch gekennzeichnet, dass**
vor und/oder hinter der Stufe (17) eine Membran (13) in einer Öffnung der Gehäuseunterseite (18) angeordnet ist, welche bei bestimmungsgemäßer Anordnung der Bodenstation dem Untergrund zugewandt ist, wobei die Membran dazu ausgelegt ist, in den Zuführungskanal (12) eingedrungenes Wasser (19), welches nicht mehr selbsttätig durch die Zuführungsöffnung (11) abfließen kann, durch die Öffnung der Gehäuseunterseite entweichen zu lassen und ein Eindringen von Wasser durch die Öffnung der Gehäuseunterseite zu verhindern.

2. Bodenstation (10) nach Anspruch 1,
**dadurch gekennzeichnet, dass**
die Höhe der zu überwindenden Stufe (17) mindestens 40 Prozent der Bauhöhe der Bodenstation beträgt, welche durch den Abstand zwischen einer dem befahrbaren Untergrund zugewandten Unterseite (18) und einer dazu gegenüberliegenden, dem befahrbaren Untergrund abgewandten Oberseite (20) gegeben ist, bevorzugt mindestens 60 Prozent, insbesondere mindestens 75 Prozent.

3. Bodenstation (10) nach einem der vorhergehenden Ansprüche,
**dadurch gekennzeichnet, dass**
die Bodenstation zur drahtlosen Energieübertragung an das Kraftfahrzeug ausgelegt ist, insbesondere zur induktiven Energieübertragung.

4. Bodenstation nach einem der vorhergehenden Ansprüche,
**dadurch gekennzeichnet, dass**
der Zuführungskanal (12) im Bereich vor und/oder hinter der Stufe (17) einen U-förmigen Verlauf aufweist, wobei insbesondere zwei U-förmige Teilstücke in entgegengesetzter Ausrichtung zur Ausbildung eines wellenförmigen Verlaufs aneinander anschließen.

5. Bodenstation nach einem der vorhergehenden Ansprüche,
**dadurch gekennzeichnet, dass**
die Bodenstation zum Ableiten des Luftstroms in den Außenbereich einen Auslasskanal (22) mit einer Auslassöffnung (16) aufweist, wobei der Auslasskanal symmetrisch zu dem Zuführungskanal (12) ausgebildet ist.

## Claims

1. Ground station (10) for charging a motor vehicle, the ground station being designed for location on a negotiable underlying ground, comprising a fan unit (14) located within the ground station and equipped for cooling at least one electric and/or electronic assembly (15) located within the ground station by means of an airflow which can be supplied from an outer region (21) of the ground station, wherein a supply passage (12) of the airflow is designed such that water (19) entering through a supply opening (11) of the supply passage at an intended arrangement of the ground station has to overcome on the way to the fan unit and/or the assembly at least one step (17) in a component of a flow direction of the water, wherein the component point in the direction opposed to the force of gravity,
**characterised in that**
in front and/or behind the step (17) there is located a diaphragm (13) in an opening of the housing underside (18), which diaphragm faces the underlying ground at an intended arrangement of the ground station, wherein the diaphragm is designed to let water (19) which has entered the supply passage (12) and can no longer flow out through the supply opening (11) automatically escape through the opening of the housing underside and to prevent an entry of water through the opening of the housing underside.

2. Ground station (10) according to claim 1,
**characterised in that**
the height of the step (17) to be overcome is at least 40 percent of the design height of the ground station, which is determined by the distance between an underside (18) facing the negotiable underlying ground and an opposite top side (20) remote from the negotiable underlying ground, preferably at least 60 percent and in particular at least 75 percent.

3. Ground station (10) according to any of the preceding claims,
**characterised in that**
the ground station is designed for wireless energy transmission to the motor vehicle, in particular for inductive energy transmission.

4. Ground station (10) according to any of the preceding claims,
**characterised in that**
the supply passage (12) is U-shaped in the region in front and/or behind the step (17), wherein two U-shaped sections in particular adjoin each other in opposite orientation to form a wave shape.

5. Ground station (10) according to any of the preceding claims,
**characterised in that**
the ground station has an outlet passage (22) with an outlet opening (16) for deflecting the airflow into the outer region, the outlet passage (22) being designed symmetrical in respect to the supply passage (12).

## Revendications

1. Station au sol (10) destinée au chargement d'un véhicule automobile, la station au sol étant conçue pour le positionnement sur un support praticable par le véhicule automobile, comprenant une unité de ventilation (14) disposée à l'intérieur de la station au sol (14), qui est conçue pour au moins refroidir un module (15) électronique et/ou électrique disposée à l'intérieur de la station au sol au moyen d'un flux d'air provenant d'une zone extérieure (21) de la station au sol, un canal d'amenée (12) du flux d'air étant conçu de telle sorte que, lorsque la station au sol se trouve dans une position conforme, de l'eau (19) pénétrant par une ouverture d'amenée (11) du canal d'amenée sur le chemin menant à l'unité de ventilateur et/ou au module au moins un gradin (17) dans un composant d'une direction d'écoulement de l'eau doit être franchi, le composant étant orienté dans la direction opposée à la pesanteur,
**caractérisée en ce que** avant et/ou après le gradin (17) est disposée une membrane (13) dans une ouverture de face inférieure de boîtier (18), qui, lorsque la station au sol est correctement positionnée, est orientée vers le support, la membrane étant conçue de telle sorte que dans le canal d'amenée (12) l'infiltration d'eau (19) dans le canal d'amenée (12), qui ne peut plus s'écouler automatiquement par l'ouverture d'amenée (11), soit amenée à dévier par l'ouverture de la face inférieure du boîtier et empêcher une infiltration d'eau par l'ouverture de la face inférieure de boîtier.

2. Station au sol (10) selon la revendication 1, **caractérisée en ce que** la hauteur du gradin à franchir (17) équivaut au moins à 40 pourcents de la hauteur de bâtiment de la station au sol, qui est donnée par la distance entre une face inférieure (18) orientée vers le support praticable et une face supérieure (20) opposée au support praticable, de préférence d'au moins 60 pourcents, de préférence encore de 75 pourcents.

3. Station au sol (10) selon l'une des revendications précédentes, **caractérisée en ce que** la station au sol est conçue comme un transfert d'énergie sans fil au véhicule automobile, en particulier pour un transfert d'énergie inductif.

4. Station au sol (10) selon l'une quelconque des revendications précédentes, **caractérisée en ce que** le canal d'amenée (12) présente dans la zone avant et/ou derrière le gradin (17) un tracé en forme de U, en particulier deux parties en forme de U dans l'orientation opposée étant reliées l'une à l'autre pour former un tracé en forme d'onde.

5. Station au sol selon l'une quelconque des revendications précédentes, **caractérisée en ce que** la station au sol pour dévier le flux d'air présente dans la zone extérieure un canal d'évacuation (22) ayant une ouverture d'évacuation (16), le canal d'évacuation étant symétrique au canal d'admission (12).
